Europäisches Patentamt

European Patent Office

Office européen des brevets

(19)

(11) Veröffentlichungsnummer: **0 253 238 B1**

## (12) EUROPÄISCHE PATENTSCHRIFT

(45) Veröffentlichungstag der Patentschrift: 29.05.91

(51) Int. Cl.⁵: **B65G** 1/10, A47B 53/02

(21) Anmeldenummer: 87109599.8

(22) Anmeldetag: 03.07.87

(54) Gestellanlage mit fahrbaren Gestelleinheiten.

(30) Priorität: 11.07.86 CH 2792/86

(43) Veröffentlichungstag der Anmeldung:
20.01.88 Patentblatt 88/03

(45) Bekanntmachung des Hinweises auf die
Patenterteilung:
29.05.91 Patentblatt 91/22

(84) Benannte Vertragsstaaten:
AT BE DE ES FR GB IT NL SE

(56) Entgegenhaltungen:
| | |
|---|---|
| CH-A- 399 322 | DE-A- 2 948 191 |
| FR-A- 2 323 184 | FR-E- 73 010 |
| GB-A- 322 211 | GB-A- 934 891 |
| NL-A- 7 612 065 | US-A- 4 375 195 |

(73) Patentinhaber: COMPACTUS AG
Birrfeldstrasse 21
CH-5507 Mellingen(CH)

(72) Erfinder: Weber, Heinz
Stutzring 4
CH-4107 Ettingen(CH)

(74) Vertreter: EGLI-EUROPEAN PATENT ATTOR-
NEYS
Horneggstrasse 4
CH-8008 Zürich(CH)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gestellanlage, bestehend aus einer Anzahl von fahrbaren Gestelleinheiten, welche einen als Fahrgestell ausgebildeten Unterteil und einen als Lagergestell ausgebildeten Oberteil aufweisen, und aus einer, mindestens eine Laufschiene umfassende Fahrbahn, auf der die Laufrollen des Fahrgestells abgestützt sind, sowie aus einem manuellen oder motorischen Antrieb für die fahrbaren Gestelleinheiten, wobei an den Fahrgestellen Führungen zur einseitigen oder beidseitigen Seitenführung der Fahrgestelle entlang der Seitenflächen der Fahrbahn befestigt sind (siehe z.B. NL-A-7612065).

Gestellanlagen mit fahrbaren Gestelleinheiten sind in verschiedenen Ausführungsformen bekannt, weisen jedoch, alle annähernd dasselb Konzept auf. Auf einer Fahrbahn , die aus zwei und mehr Schienen bestehen kann, sind fahrbare Gestelleinheiten verschiebbar angeordnet. Die Gestelleinheiten weisen im wesentlichen einen und als Fahrgestell ausgebildeten Unterteil und einen darüber liegenden Oberteil auf, welcher für die Lagerung verschiedener Materialien verwendet wird. Die Fahrgestelleinheiten werden manuell oder motorisch angetrieben, wobei bei einem motorischen Antrieb auch eine Steuerung eingesetzt wird, mit welcher die gewünschte Gestelleinheit zugänglich gemacht werden kann.

Die fahrbaren Gestelleinheiten können je nach dem zur Unterbringung vorgesehenen Lagermaterial beträchtliche Gewichte aufweisen, die über die Laufrollen auf die Fahrbahn übertragen werden. Obwohl die Fahrbahn ganz genau ausgerichtet werden kann, ist es nicht zu vermeiden, dass im Laufe der Zeit kleine Abweichungen der Fahrbahn durch Nachgeben des Unterbaus der Fahrbahn auftreten können. Aus diesem Grunde werden die Gestelleinheiten mittels Führungsrollen seitlich geführt (NL-A-7612065 und (H-A-399322). Diese seitlichen Führungsrollen stellen einerseits eine verhältnismässig aufwendige Lösung dar und weisen andererseits den Nachteil auf, dass solche Führungsrollen nicht wartungsfrei sind. Eine Wartung ist jedoch wegen der schlechten Zugänglichkeit zu den Führungsrollen schwierig und entsprechend aufwendig.

Hier setzt die Erfindung ein, der die Aufgabe zugrunde liegt, eine Gestellanlage der eingangs beschriebenen Art so weiter auszugestalten, dass eine Seitenführung der Gestelleinheiten von hoher Lebensdauer, jedoch in einfacher und wartungsfreier Weise verwirklicht werden kann.

Diese Aufgabe wird gemäss der Erfindung dadurch gelöst, dass die Führungen relativ zum Fahrgestell festehende Gleitelemente umfassen, deren Seitenflächen eine parallel zur Fahrbahn liegende vertikale Ebene aufweisen. Dadurch, dass die seitlichen Führungen der Gestelleinheiten als Gleitelemente ausgebildet sind, bei welcher keine beweglichen Teile vorhanden sind, wird in einfacher Weise eine wartungsfreie Lösung erreicht, welche zudem über eine sehr lange Betriebsdauer funktionstüchtig ist.

Die Erfindung ist in der Zeichnung in einigen Ausführungsbeispielen dargestellt und nachfolgende beschrieben. Es zeigen

Fig. 1 eine schematisch dargestellte Seitenansicht einer fahrbaren Gestelleinheit einer Gestellanlage,

Fig. 2 einen Schnitt längs der Linie II-II mit einer ersten Ausführungsform eines Gleitelementes zur Seitenführung der Gestelleinheiten in vergrösserter Darstellung,

Fig. 3 einen Schnitt längs der Linie III-III in Fig. 1 mit einer zweiten Ausführungsform eines Gleitelementes in vergrösserter Darstellung,

Fig. 4 eine schematisch dargestellte Seitenführung einer Gestelleinheit mit einer dritten Ausführungsform eines Gleitelementes in räumlicher Darstellung,

Fig. 5 eine schematisch dargestellte Seitenführung einer Gestelleinheit mit einer vierten Ausführungsform eines Gleitelementes in räumlicher Darstellung und

Fig. 6 einen Schnitt längs der Linie VI-VI in Fig. 1 mit einer fünften Ausführungsform eines Gleitelementes.

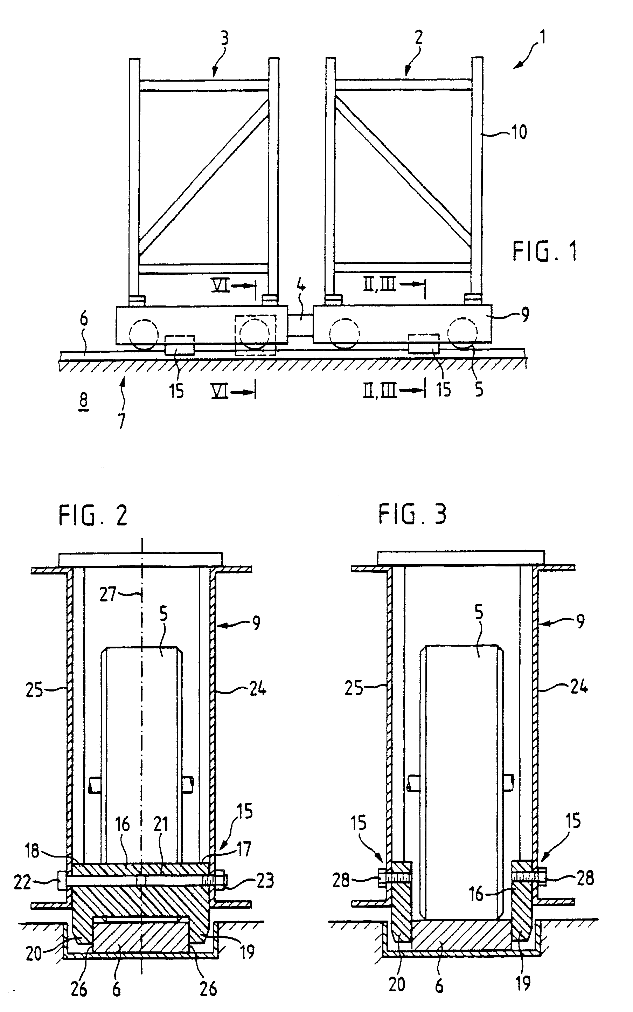

In Fig. 1 ist eine Fahrgestelleinheit 1 schematisch dargestellt, die sich aus zwei Teileinheiten 2, 3 zusammensetzt, die durch geeignete Kupplungsmittel 4 miteinander gekuppelt sind. Die Fahrgestelleinheit 1 weist einen Rollensatz mit 4 Laufrollen 5 auf. Je nach der Breite der Fahrgestelleinheit 1 werden ein oder mehr Rollensätz zur Abstützung der Fahrgestelleinheit 1 eingesetzt.

Die Laufrollen 5 sind auf einer Laufschiene 6 abgestützt, welche einen Teil einer Fahrbahn 7 mit den an einem Fundament 8 befestigten Laufschienen 6 ist.

Werden nur kleinere Lagergüter in der Fahrgestelleinheit 1 untergebracht, kann die Gestelleinheit 1 aus nur einer der Teileinheit 2, 3 bestehen. Die Gestelleinheit 1 besteht aus einem als Fahrgestell ausgebildeten Unterteil 9 und einem darauf abgestützten, als Lagerteil ausgebildeten Oberteil 10. Zur Seitenführung der Laufrollen 5 auf den Laufschienen ist gewöhnlich eine der Laufschienen 6 derart ausgebildet, dass an derselben etwaige Seitenkräfte aufgenommen werden können. Hierzu sind Gleitelemente 15, siehe Fig. 1, vorgesehen, die an dem Fahrgestell 9 befestigt sind und mit einer Seitenfläche der Laufschiene 6 zusammenwirken, wie dies noch im Detail erläutert wird.

Die in Fig, 2 dargestellt Ausführungsform eines Gleitelementes 15 weist einen Basiskörper 16 auf, an dessen Enden 17, 18 je ein Gleitkörper 19, 20 angeordnet ist. Der Basiskörper 16 und die Gleitkörper 19, 20 bilden hier einen einzigen Körper, der zweckmässig aus einem reibungsarmen Kunststoff hergestellt ist. Im Basiskörper 16 ist eine horizontale Bohrung 21 vorgesehen, in welcher ein Schraubbolzen 22 mit einer Mutter 23 eingelegt ist, mit welcher das Gleitelement 15 am Fahrgestell 9, beispielsweise an einer Seitenwand 24, 25, befestigt ist.

Das Gleitelement 15, siehe Fig. 1, ist seitlich neben den Laufrollen 5 angeordnet. Die Gleitkörper 19, 20 umgreifen die Laufschiene 6 und sind an den Seitenflächen 26 der Laufschiene 6 geführt. Ein Abweichen der Rolle 5 und der Laufschiene 6 ist damit nicht möglich.

Es wäre auch möglich, das einteilige Gleitelement 15 zweiteilig, beispielsweise durch eine Teilung in der Mittenebene 27, auszuführen. Dies hätte den Vorteil, dass eine unterschiedliche Breite der Laufschiene 6 durch Einlegen von Unterlagen in der Mittenebene kompensiert werden kann, ohne dass andere Gleitelemente verwendet werden müssten.

In Fig. 3 sind zwei Gleitelemente 15 dargestellt, deren Basiskörper 16 zur Befestigung an einer Seitenwand 24, 25 gegenüber den Gleitkörpern 19, 20 klein ist, so dass das Gleitelement 15 die Form einer Gleitplatte aufweist. Diese Gleitplatte ist mit einer Kopfschraube 28 am Fahrgestell 9 befestigt. Die Funktion der beiden, Gleitplatten bildenden Gleitelemente 15 ist dieselbe wie diejenige des Gleitelementes 15 nach Fig. 2. Mit den Gleitkörpern 19, 20 wird die Gestelleinheit längs der Laufschiene 6 geführt. Die Anordnung der Gleitelemente 15 nach Fig. 3 erfolgt in gleicher Weise neben oder in der Nähe der Laufrollen 5.

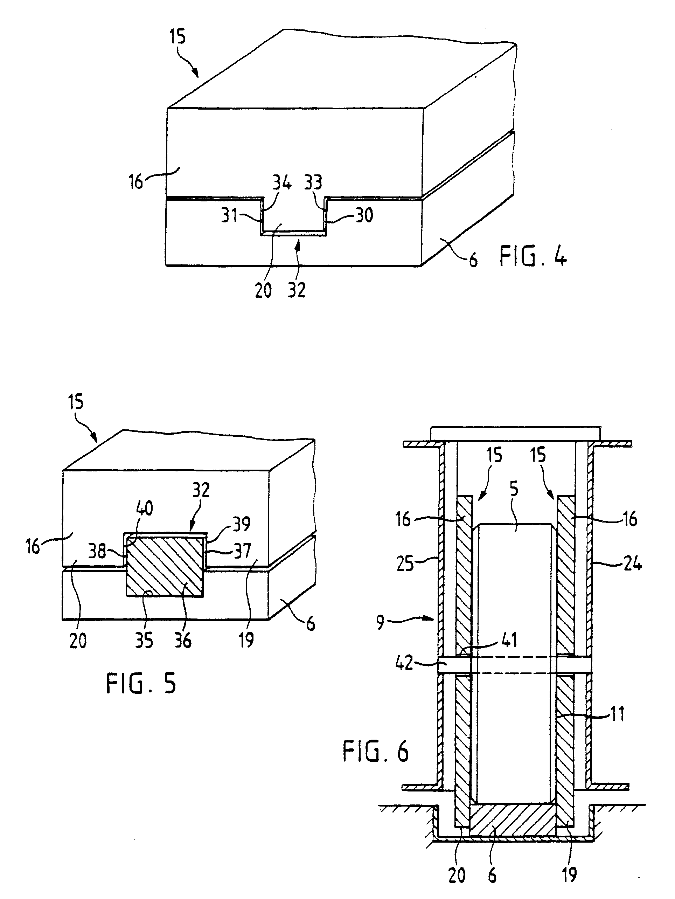

Das in Fig. 4 dargestellte Gleitelement 15 weist einen Basiskörper 16 und einen Gleitkörper 20 auf, wobei die beiden Körper 16, 20 einen einzigen Teil bilden. Der Gleitkörper 20 ist im wesentlichen ein nach abwärts gerichteter Kamm, der an seinen beiden Seitenflächen 30, 31 zwei Führungsflächen bildet.

Das Gleitelement 15 ist in geringem Abstand über der Laufschiene 6 angeordnet und in nicht dargestellter Weise mit dem Fahrgestell einer Gestelleinheit befestigt. Auf der Oberfläche der Laufschiene 6 ist eine Führungsnut 32 eingearbeitet, deren Seitenflächen 33, 34 zusammen mit den Seitenflächen 30, 31 des Gleitkörpers 20 die Führung der Gestelleinheit bilden. Das Gleitelement 15 kann aus einem reibungsarmen Kunststoff bestehen oder ein Metallblock sein, bei welchem die Seitenflächen 30, 31 des Gleitkörpers 20 mit einer reibungsarmen Gleitschicht abgedeckt ist.

Das in Fig. 5 dargestellte Gleitelement 15 weist eine gewisse Aehnlichkeit mit dem Gleitelement 15 nach Fig. 4 auf, jedoch ist hier die Führungsnut 32 im Gleitelement 15 vorgesehen, welches sich aus dem Basiskörper 16 und den beiden Gleitkörpern 19, 20 zusammensetzt und ein einziges Werkstück bildet.

In der Laufschiene 6, die mit geringem Abstand unter dem Gleitelement 15 verlegt ist, ist eine Haltenut 35 eingearbeitet, in welche ein quaderförmiger Führungskörper 36 eingelegt ist. Die Seitenflächen 37, 38 des Führungskörpers 36 bilden zusammen mit den Seitenflächen 39, 40 des Gleitelementes 15 die beidseitige Seitenführung des nicht dargestellten Fahrgestells der Gestelleinheit. Das Gleitelement 15 gemäss Fig. 5 ist in gleicher Weise wie das Gleitelement 15 nach Fig. 4 auf der Unterseite des Fahrgestells befestigt und weist einen geringen Abstand zur Oberfläche der Fahrschiene 6 auf.

In Fig. 6 ist noch eine weitere Ausführungsform des Gleitelementes bzw. von zwei Gleitelementen 15 dargestellt. Die Anordnung dieser Gleitelemente 15 im Fahrgestell 9 ist an der rechten Laufrolle 5 der Teileinheit 3 (Fig. 1) schematisch dargestellt. Die Gleitelemente 15 sind hier als Platten oder Scheiben ausgebildet, deren Basiskörper 16 sich über die Stirnfläche 11 der Laufrolle 5 erstreckt, während die Gleitkörper 19, 20 sich beidseits der Seitenflächen der Laufschiene 6 erstrecken und eine beidseitige Führung des Fahrgestells 9 bilden. Die Basiskörper 16 sind mit einer Bohrung 41 versehen, mit Hilfe welcher die Gleitelemente 15 auf die feststehende Welle 42 der Laufrolle 5 gesteckt werden können. Die Gleitelemente 15 sind somit feststehend neben der Laufrolle 5 angeordnet. Gegebenenfalls können sie noch zusätzlich mit Schrauben (nicht dargestell) an den Seitenwänden 24, 25 befestigt werden.

Die Verwendung einfacher, am Fahrgestell 9 befestigter Gleitelemente 15 stellt eine einfache, jedoch zuverlässige und haltbare Lösung dar. Hierbei ist es zweckmässig, dass die Gleitelemente 15 aus einem reibungsarmen Kunststoff, z.B. aus einem unter der Gattungsbezeichnung Nylon bekannten Polyamid, bestehen. Hierbei können der Basiskörper 16 und der Gleitkörper 19 ein einteiliges oder mehrteiliges Gleitelement 15 bilden. Die Reibungseigenschaften des Nylons können noch dadurch verbessert werden, dass Graphit oder Molybdändisulfid zugefügt wird. Ein anderer Kunststoff für die Gleitelemente 15 ist PTFE (Polytetrafluoräthylen), das beispielsweise unter dem Markennamen "Teflon" bekannt ist.

Anstelle von aus Kunststoff hergestellten Gleitelementen 15 ist es auch möglich, Gleitelemente aus Stahl zu verwenden, welche in den der Seitenführung dienenden Seitenflächen Einsätze aufweisen, die mit einem reibungsarmen Material beschichtet sind. Solche Einsätze sind beispielsweise für die Lagerung von Kurbelwellen bekannt. In gleicher Weise kann der Führungskörper 36, siehe Fig. 5, als Kunststoffkörper oder Metallkörper mit Gleiteinsätzen an den Führungsflächen ausgebildet sein.

**Ansprüche**

1. Gestellanlage, bestehend aus einer Anzahl von fahrbaren Gestelleinheiten (1), welche einen als Fahrgestell ausgebildeten Unterteil (9) und einen als Lagergestell ausgebildeten Oberteil (10) aufweisen, und aus einer, mindestens eine Laufschiene (6) umfassende Fahrbahn (7), auf der die Laufrollen (5) des Fahrgestelles abgestützt sind, sowie aus einem manuellen oder motorischen Antrieb für die fahrbaren Gestelleinheiten, wobei an den Fahrgestellen (9) Führungen zur einseitigen oder beidseitigen Seitenführung der Fahrgestelle entlang der Seitenflächen (26; 33, 34; 37, 40) der Fahrbahn (7) befestigt sind, dadurch gekennzeichnet, dass die Führungen relativ zum Fahrgestell feststehende Gleitelemente (15) umfassen, deren Seitenflächen (30, 31; 39, 40) eine parallel zur Fahrbahn (7) liegende vertikale Ebene aufweisen.

2. Gestellanlage nach Anspruch 1, dadurch gekennzeichnet, dass die Gleitelemente (15) zwischen den Laufrollen (5) oder an den inneren oder äusseren Seitenflächen der Laufrollen (5) angeordnet sind.

3. Gestellanlage nach Anspruch 1 oder 2, dadurch gekennzeichnet, dass die Gleitelemente (15) an einem Wandteil (24, 25) des Fahrgestells (9) befestigt, beispielsweise geschraubt, sind.

4. Gestellanlage nach einem der Ansprüche 1 bis 3, dadurch gekennzeichnet, dass die Gleitelemente (15) aus einem Basiskörper (16) und mindestens einem, vorzugsweise integral mit dem Basiskörper verbundenen Gleitkörper (19, 20) als Führungsteil zusammengesetzt sind.

5. Gestellanlage nach Anspruch 4, dadurch gekennzeichnet, dass der Basiskörper (16) des Gleitelementes (15) mit je einem beidseits angeordneten Gleitkörper (19, 20) die Laufschiene (6) übergreift.

6. Gestellanlage nach einem der Ansprüche 1 bis 5, dadurch gekennzeichnet, dass das Gleitelement (15) in der Symmetrieebene, z.B. entsprechend der Mittenebene (27) der Laufschiene (6), in zwei Teile unterteilt ist, wobei bei beidseitiger Seitenführung des Fahrgestelles (9) die Basiskörper in der Mittenebene zusammenstossen.

7. Gestellanlage nach Anspruch 5 oder 6, dadurch gekennzeichnet, dass im Basiskörper bzw. in den Basiskörpern (16) eine Durchgangsbohrung bzw. Durchgangsbohrungen (21) zur Aufnahme eines Schraubenbolzens (22, 23) angeordnet ist bzw. sind, mit welchem das Gleitelement bzw. die Gleitelemente (15) an einem Wandteil (24, 25) des Fahrgestelles (9) der Gestelleinheit (1) befestigt ist bzw. sind.

8. Gestellanlage nach einem der Ansprüche 1 bis 7, dadurch gekennzeichnet, dass der Basiskörper (16) des Gleitelementes (15) über der Laufschiene (6) der Fahrbahn (7) angeordnet ist und einen als Kamm ausgebildeten Gleitkörper (20) aufweist, dessen Seitenflächen (30, 31) zur Seitenführung des Fahrgestelles in eine in der Laufschiene (6) der Fahrbahn (7) vorgesehene Führungsnut (32) ragen.

9. Gestellanlage nach Anspruch 8, dadurch gekennzeichnet, dass der als Kamm ausgebildete Gleitkörper (20) zusammen mit dem Basiskörper (16) ein einteiliges oder zweiteiliges Gleitelement (15) bildet.

10. Gestellanlage nach Anspruch 8 oder 9, dadurch gekennzeichnet, dass der Kamm als ein sowohl vom Basiskörper (16) als auch vom Gleitkörper (19) getrennter Führungskörper (36) ausgebildet ist, wobei sowohl in der Laufschiene (6) der Fahrbahn (7) als auch im Gleitelement (15) wahlweise eine Führungsnut (32) bzw. eine Haltenut (35) vorgesehen sind, wobei der Führungskörper (36) bei in der Laufschiene (6) angeordneter Haltenut (35) in der Halteschiene und bei im Haltelement (15) angeordneter Haltenut (35) in dem Gleitelement (15) befestigt ist.

11. Gestellanlage nach einem der Ansprüche 1 bis 10, dadurch gekennzeichnet, dass das Halteelement (15) aus einem reibungsarmen Kunststoff oder aus Metall geformt ist, wobei letzterer an den Führungsflächen mit einem reibungsarmen Abdeckung bedeckt ist.

**Claims**

1. Rack system, composed of a number of mobile rack units (1), which have a lower part (9), designed as a chassis, and an upper part (10), designed as a storage rack, and of a trackway (7), comprising at least one running rail (6) on which the running rollers (5) of the chassis are supported, as well as of a manual or motor drive for the mobile rack units, guides being fastened to the chassis (9) for lateral guidance, on one or both sides, of the chassis along the side surfaces (26; 33, 34; 37, 40) of the trackway (7), characterised in that the guides comprise sliding elements (15) which are fixed relative to the chassis and the side surfaces (30, 31; 39, 40) of which have a vertical plane lying parallel to the trackway (7).

2. Rack system according to Claim 1, characterised in that the sliding elements (15) are arranged between the running rollers (5) or on the inner or outer side surfaces of the running rollers (5).

3. Rack system according to Claim 1 or 2, characterised in that the sliding elements (15) are fastened, for example screwed, to a wall part (24, 25) of the chassis (9).

4. Rack system according to one of Claims 1 to 3, characterised in that the sliding elements (15) are made up of a basic body (16) and at least one sliding body (19, 20) as guide part, preferably integrally connected to the basic body.

5. Rack system according to Claim 4, characterised in that the basic body (16) of the sliding element (15) engages over the running rail (6) with a sliding body (19, 20) arranged on each of both sides.

6. Rack system according to one of Claims 1 to 5, characterised in that the sliding element (15) is subdivided into two parts in the plane of symmetry, for example corresponding to the centre plane (27) of the running rail (6), the basic bodies meeting in the centre plane in the case of lateral guidance on both sides of the chassis (9).

7. Rack system according to Claim 5 or 6, characterised in that in the basic body or in the basic bodies (16) there is or are arranged a through-bore or through-bores (21) for receiving a screw bolt (22, 23), with which the sliding element or the sliding elements (15) is or are fastened to a wall part (24, 25) of the chassis (9) of the rack unit (1).

8. Rack system according to one of Claims 1 to 7, characterised in that the basic body (16) of the sliding element (15) is arranged above the running rail (6) of the trackway (7) and has a sliding body (20), designed as a comb, the side surfaces (30, 31) of which protrude into a guide groove (32), provided in the running rail (6) of the trackway (7), for lateral guidance of the chassis.

9. Rack system according to Claim 8, characterised in that the sliding body (20) designed as a comb forms together with the basic body (16) a one-part or two-part sliding element (15).

10. Rack system according to Claim 8 or 9, characterised in that the comb is designed as a guide body (36) separate both from the basic body (16) and from the sliding body (19), a guide groove (32) or, optionally, a retaining groove (35) being provided both in the running rail (6) of the trackway (7) and in the sliding element (15), the guide body (36) being fastened in the retaining rail, in the cage of a retaining groove (35) arranged in the running rail (6), and being fastened in the sliding element (15), in the case of a retaining groove (35) arranged in the retaining element (15).

11. Rack system according to one of Claims 1 to 10, characterised in that the retaining element (15) is formed from a low-friction plastic or from metal, the latter being covered on the guide surfaces with a low-friction covering.

## Revendications

1. Rayonnage constitué d'un certain nombre d'unités de rayonnage (1) déplaçables qui comportent une partie inférieure (9) configurée en chariot et une partie supérieure (10) configurée en rayonnage de stockage, ainsi que d'une voie de roulement (7) comprenant au moins un rail de roulement (6), sur laquelle prennent appui les roues (5) du chariot, ainsi que d'un entraînement manuel ou motorisé pour les unités de rayonnage déplaçables, des organes de guidage étant fixés sur les chariots (9), pour le guidage latéral des chariots, d'un côté ou des deux côtés, le long des surfaces latérales (26 ; 33, 34 ; 37, 40) de la voie de roulement (7), caractérisé en ce que les organes de guidage comportent des éléments de glissement (15), fixes par rapport au chariot, dont les surfaces latérales (30, 31 ; 39, 40) présentent un plan vertical, parallèle à la voie de roulement (7).

2. Rayonnage selon la revendication 1, caractérisé en ce que les éléments de glissement (15) sont placés entre les roues (5) ou sur les surfaces latérales intérieures ou extérieures des roues (5).

3. Rayonnage selon la revendication 1 ou 2, caractérisé en ce que les éléments de glissement sont fixés, par exemple vissés, sur une partie de paroi (24, 25) du chariot (9).

4. Rayonnage selon l'une des revendications 1 à 3, caractérisé en ce que les éléments de glissement (15) sont constitués d'un corps de base (16) et d'au moins un corps de glissement (19, 20), servant d'élément de guidage, assemblé de préférence intégralement au corps de base.

5. Rayonnage selon la revendication 4, caractérisé en ce que le corps de base (16) de l'élément de glissement (15) passe sur le rail de roulement (6) par un corps de glissement (19, 20) disposé sur chacun des deux côtés.

6. Rayonnage selon l'une des revendications 1 à 5, caractérisé en ce que l'élément de glissement (15) est divisé en deux parties dans le plan de symétrie, par exemple suivant le plan médian (27) du rail de roulement (6), dans le cas d'un guidage latéral sur les deux côtés du chariot (9), les corps de base étant jointifs dans le plan médian.

7. Rayonnage selon la revendication 5 ou 6, caractérisé en ce que dans le ou les corps de base (16) est ou sont pratiqué(s) un perçage débouchant ou des perçages débouchants (21) destinés à recevoir un boulon (22, 23) par lequel l'élément de glissement ou les éléments de glissement (15) est ou sont fixé(s) sur une partie de paroi (24, 25) du chariot (9) de l'unité de rayonnage (1).

8. Rayonnage selon l'une des revendications 1 à 7, caractérisé en ce que le corps de base (16) de l'élément de glissement (15) est placé sur le rail (6) de la voie de roulement (7) et comporte un corps de glissement (20) en forme de peigne dont les surfaces latérales (30, 31) s'engagent dans une rainure de guidage (32), prévue dans le rail de roulement (6) de la voie de roulement (7), pour guider latéralement le chariot.

9. Rayonnage selon la revendication 8, caractérisé en ce que le corps de glissement (20), se présentant sous la forme d'un peigne, forme conjointement avec le corps de base (16), un élément de glissement (15) en une partie ou en deux parties.

10. Rayonnage selon la revendication 8 ou 9, caractérisé en ce que le peigne est un corps de guidage (36) séparé du corps de base (16) et du corps de glissement (19), une rainure de guidage (32) ou une rainure de maintien (35) au choix, étant prévue dans le rail de roulement (6) de la voie de roulement (7) ainsi que dans l'élément de glissement (15), le corps de guidage (36) étant fixé dans le rail de maintien, dans le cas d'une rainure de maintien (35) placée dans le rail de roulement (6) et étant fixé dans l'élément de glissement (15), dans le cas d'une rainure de maintien (35) placée dans l'élément de maintien (15).

11. Rayonnage selon l'une des revendications 1 à 10, caractérisé en ce que l'élément de maintien (15) est formé dans une matière plastique à faible coefficient de friction ou dans un métal, ce dernier étant recouvert sur ses surfaces de guidage d'un revêtement à faible coefficient de friction.

FIG. 1

FIG. 2

FIG. 3

7

FIG. 4

FIG. 5

FIG. 6